# EUROPEAN PATENT SPECIFICATION

(11) **EP 0 451 137 B1**
(45) Date of publication and mention of the grant of the patent: **16.03.1994**
(21) Application number: 88905277.5
(22) Date of filing: 23.05.1988
(51) Int. Cl.: G02B 6/38, H01R 13/66

(54) **OPTO-ELECTRICAL CONNECTOR**
OPTO-ELEKTRISCHER STECKER
CONNECTEUR ELECTRO-OPTIQUE

(30) Priority: 19.06.1987 GB 8714397
(43) Date of publication of application: 16.10.1991
(73) Proprietor: THE WHITAKER CORPORATION, Wilmington, Delaware 19808 (US)
(72) Inventor: TEN BERGE, Eduardus, Franciscus, Antonius, NL- 5151 SL Drunen (NL)
(74) Representative: Warren, Keith Stanley
(86) International application number: US8801640
(87) International publication number: WO8810440

(56) References cited:
- EP-A- 0 164 993
- DE-A- 3 112 078
- GB-A- 2 110 410
- J.E.E. Journal of Electronic Engineering, vol. 19, no. 184, April 1982 (Tokyo, JP) M. Tohkoku et al.: "Connector forms a vital part of fiber optic communication system", pp 28-41, 71, 72.

## Description

This invention relates to an opto-electrical connector.

There is described in US-A-4 568 145 an opto-electrical connector comprising first and second mating members each comprising an optical fiber having an optical end face and each comprising an elongate electrical conductor connected to an electrical lead and being supported in parallel relationship with said optical fiber, said mating members being matable to bring the optical end faces of the optical fibers into light transmitting relationship with each other and simultaneously to bring said conductors into electrically conductive contact with each other.

In this known connector, the optical fiber and the electrical conductor of each mating member are separately supported in a housing in spaced relationship transversely of the mating direction of the mating members and each housing comprises a multiplicity of parts for insulating the conductor and for supporting the optical fiber in the housing.

The present invention is intended to provide an opto-electrical connector, of simplified construction.

According to the invention, an opto-electrical connector, as defined in the second paragraph of this specification, is characterised in that the electrical conductor of each mating member is in the form of a rigid metal tube which is concentric with, and encases, the optical fiber of the mating member, said metal tube having an end electrical contact surface which is proximate to the optical end face of the fiber of the mating member; and in that an insulating alignment member is provided defining a confined path receiving both of said mating members therein for movement relatively towards one another to engage said end contact surfaces in butt relationship and simultaneously to bring said optical faces into light transmitting relationship with each other.

EP-A-0 164 993 discloses an electrical and fiber optical connector comprising first and second mating members each comprising an optical fiber having an optical end face and an electrical conductor supported in parallel relationship with the optical fiber, the mating members being matable to bring the optical end faces of the optical fibers into light transmitting relationship with each other and simultaneously to bring said conductors into electrically conductive contact with each other. The electrical conductor of each mating member is in the form of a rigid metal tube which is concentric with, and encases, the optical fiber of the mating member.

The tube of each mating member of a connector according to the present invention may be of any convenient cross-sectional shape and the fiber may be secured in the tube by means of an adhesive.

The tube is preferably, however, in the form of a metal coating on the optical fiber. Such metal coated optical fibers are known as "optical needles". As described in EP-A1-96511, the metal coating may be provided by electroplating the fiber with metal over a previously applied metal layer and then etching the coating so provided to the required thickness after said optical surface has been formed. The metal coatings of the fibers and the alignment member can be dimensioned to very close tolerances, especially where the alignment member is made of a ceramic material, to provide a very close, frictional sliding fit for the coated fibers.

The alignment member may be in the form of a ferrule, for example of a ceramic material or of glass. Preferably, the bore of the ferrule has an outwardly flared guiding mouth at each end, for guiding the respective mating members into the ferrule bore. The alignment member may, however, comprise a plurality of parts secured together to define a confined path for the mating members.

The connector may be used, for example, for the connection of a lead of an electro-optical device, for example an electromagnetic optical switch, to external optical circuitry and it may conveniently be arranged for an electrical component, for example the electromagnet, of said device to be deactivated if the end electrical contact surfaces of the metal tubes of the mating members are not in electrically conductive contact.

The electro-optical device may comprise a plurality of leads, each connected to external optical circuitry by means of a connector according to the invention, the electro-optical device being arranged to be deactivated if said end contact surfaces of any one of the connectors are not in electrical contact.

The connector may be used simply as an electro-optical switch.

For a better understanding of the invention and to show how it may be carried into effect, reference will now be made by way of example to the accompanying drawings, in which:
FIGURE 1 is an axial sectional view of an opto-electrical connector in an electrical circuit breaking condition;
FIGURE 2 is a similar view to that of Figure 1 but showing the connector in an electrical circuit making condition; and
FIGURE 3 is a diagrammatic view of an electro-optical device comprising connectors according to Figures 1 and 2.

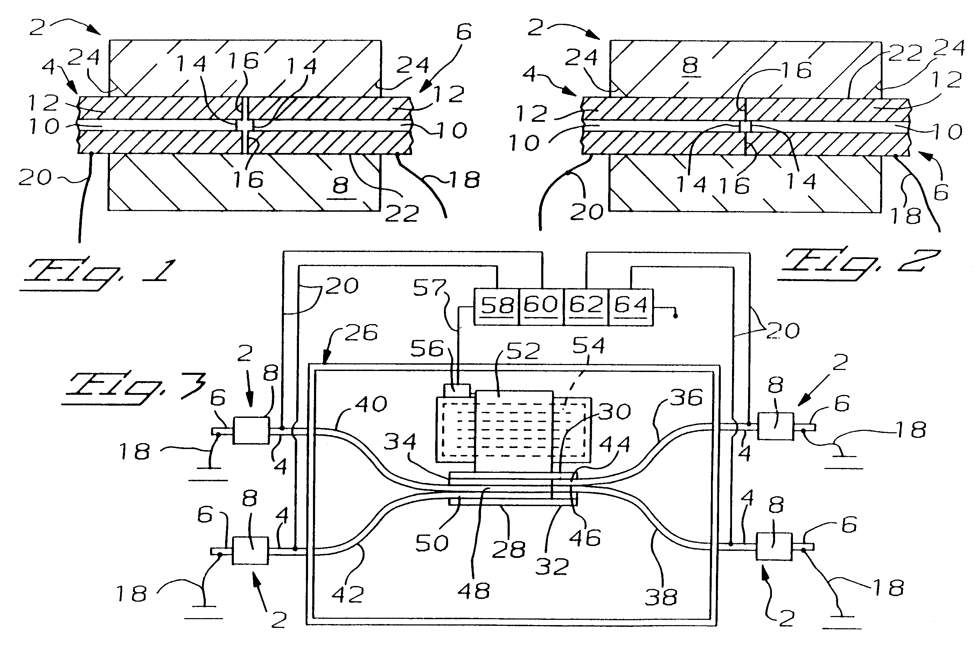

As shown in Figures 1 and 2, the connector, which is generally referenced 2, comprises a pair of mating members in the form of a pair of optical needles 4 and 6, respectively, and an insulating ferrule 8. Each optical needle 4 and 6, comprises a central optical fiber 10 having a circular cross section, concentric, constant diameter metal coating 12. Each fiber 10 has an optical end face 14 extending at right angles to the longitudinal axis of the fiber 10, each metal coating 12 having an end electrical contact surface 16 also extending at right angles to said axis and the optical surface 14 of each needle 4 and 6 being set back slightly from its electrical contact surface 16. A first electrical lead 18 is electrically connected to the metal coating 12 of the needle 6, a second electrical lead 20 being electrically connected to the metal coating 12 of the needle 4.

The ferrule 8, which is of circular cross section and is cylindrical, is preferably made of a ceramic material and has a central, circular cross section bore 22 which is of constant cross section, except its ends, at each of which the bore 22 is formed with an enlarged axially outwardly flared, needle guiding mouth 24. Each needle 4 and 6 is dimensioned relative to the bore 22 so as to be axially and frictionally slidable therein with a snug fit, after having been inserted through the respective mouth 24.

Figure 1 shows the connector 2 in a circuit breaking condition, that is to say with the electrical contact surfaces 16 of coatings 12 spaced from one another so that the leads 18 and 20 are electrically disconnected from each other and the optical faces 14 are spaced from one another so that they are not within effective transmitting range of each other.

The needles 4 and 6 can be slid relatively towards one another in the bore 22 from their Figure 1 position to bring the connector 2 to a circuit making condition, in which, as shown in Figure 2, the electrical contact surfaces 16 of the coatings 12 of the needles 4 and 6 engage one another in butt relationship so that a firm electrical contact is made between the surfaces 16 so that the leads 18 and 20 are electrically connected together, the optical faces 14 then being in light transmitting relationship.

An example of one industrial use of the connector 2 will now be described. As shown in Figure 3, an opto-electrical switching device comprises a frame 26 to which is mounted an optical fiber receiving channel 28 comprising side walls 30 and 32 and a base 34. Metal coated optical fibers 36, 38, 40 and 42 each have a lead portion at one end secured to the frame 26 and constituting the optical needle 4 of a connector 2 and being received in the ferrule 8 of the connector 2. The needles 6 of the connectors 2 are arranged to be connected at their ends remote from the ferrules 8, to external optical circuitry (not shown). The opposite end portions 44 and 46, respectively, of the fibers 36 and 38, which end portions are electrically insulated from each other, are fixed in the channel 28 so as to extend along the base 34 thereof and are provided with optical faces, these being in coplanar relationship. The opposite end portions 48 and 50, respectively, of the fibers 40 and 42 are also provided with optical faces and are joined together and extended along the base 34 of the channel 28 with their optical end faces in coplanar relationship, said end portions 48 and 50 being electrically insulated from each other. The channel 28 is wide enough to allow the end portions 48 and 50 to be shifted there across. The solenoid 52 of an electromagnet 54 is also mounted to the frame 26, the electromagnet 54 being actuable to bring the optical faces of the end portions 48 and 50 into alignment with the optical faces 44 and 46, respectively, so that light can be transmitted from the fiber 36 to the fiber 40 and from the fiber 38 to the fiber 42. The solenoid 52 is energizable to actuate the electromagnet 54 upon a trigger circuit 56 being brought to an active state upon an inlet lead 57 of the circuit 56 being energized. There are arranged in series in the lead 57, no-volt switches 58, 60, 62 and 64 respectively. The lead 20 connected to the fiber 42 is the input lead of the switch 58, the lead 20 connected to the fiber 40 is the input lead of the switch 60, the lead 20 connected to the fiber 36 is the input lead of the switch 62, and the lead 20 connected to the fiber 38 is the input lead of the switch 64. In order to enable the circuit 56 to be driven to its active state by energization of its lead 56, each switch 58, 60, 62 and 64 must be energized by way of its lead 20. If one of the leads 20 remains unenergized the circuit 56 remains inactive so that the electromagnet 54 cannot be operated by applying a signal to the lead 57.

As shown in Figure 3, each lead 18 is connected to a voltage source, so that if the corresponding connector 2 is in its circuit making, Figure 2 condition, the corresponding lead 20 is energized. Should, however, one of the connectors 2 be in a circuit breaking condition as a result of incomplete insertion of the needle 4 or 6, the electromagnet 54 cannot be energized since the associated no-volt switch remains open.

The connectors 2, in fact, not only serve as optical connectors into which the needles 4 and 6 can be plugged to connect the opto-electrical device to optical circuitry, but also act as safety devices which prevent the electromagnet 54 from being operated unless all of the fibers 36, 38, 40 and 42 are properly connected to the said external circuitry via the connectors 2.

## Claims

1. An opto-electrical connector (2) comprising first and second mating member (4 and 6) each comprising an optical fiber (10) having an optical end face (14), and each comprising an elongate electrical conductor (12) connected to an electrical lead (18 or 20) and being supported in parallel relationship with said optical fiber (10), said mating members (4 and 6) being matable to bring the optical end faces (14) of the optical fibers (10) into light transmitting relationship with each other and simultaneously to bring said conductors (12) into electrically conductive contact with each other; characterized in that the electrical conductor (12) of each mating member (4 and 6) is in the form of a rigid metal tube (12) which is concentric with, and encases, the optical fiber (10) of the mating member (4 or 6), said metal tube (12) having an end electrical contact surface (16) which is proximate to the optical end face (14) of the fiber (10) of the mating member (4 or 6); and in that an insulating alignment member (8) is provided defining a confined path receiving both of said mating members therein for movement relatively towards one another to engage said electrical contact surfaces (16) in butt relationship and simultaneously to bring said optical faces (14) into light transmitting relationship with each other.

2. A connector as claimed in claim 1, characterized in that the optical end face (14) of each mating member (4 or 6) extends at right angles to the longitudinal axis of the fiber (10) and parallel to the end electrical contact surface (16) of the metal tube (12), the optical end face (14) being set back from said contact surface (16) and relative to said longitudinal axis.

3. A connector as claimed in claim 1 or 2, characterized in that the alignment member (8) is made of a ceramic material.

4. A connector according to claim 1, 2 or 3, characterized in that each mating member (4 or 6) is in the form of an optical needle.

5. A connector according to any one of the preceding claims, characterized in that, the alignment member is in the form of a ferrule (8) having a bore (22) snugly and slidably receiving said mating members (4 and 6).

6. An electro-optical device comprising an electrical component (52, 54) and optical fiber leads (36, 38, 40 and 42) each connected to external optical circuitry by means of a connector as claimed in any one of the preceding claims, characterized in that the electrical lead (18) connected to the tube (12) of one (6) of the mating members (4 and 6) of each connector (2) is connected to an electrical voltage source, the electrical lead (20) connected to the tube (12) of the other mating member (4) being connected to said electrical component (52, 54) through means (58, 60, 62 or 64) for inhibiting operation of the electrical component (52, 54) when the electrical contact surfaces (16) of the metal tubes (12) of the mating members (4 and 6) are spaced from one another.

## Patentansprüche

1. Opto-elektrischer Verbinder (2) mit einem ersten und einem zweiten Fügeglied (4 und 6), die jeweils eine optische Faser (10) aufweisen, die eine optische Endfläche (14) hat, und die jeweils einen länglichen elektrischen Leiter (12) aufweisen, der an eine elektrische Leitung (18 oder 20) angeschlossen und parallel zu der optischen Faser (10) gehaltert ist, wobei die Fügeglieder (4 und 6) zusammenfügbar sind, um die optischen Endflächen (14) der optischen Fasern (10) in eine lichtübertragende Beziehung miteinander zu bringen und gleichzeitig die Leiter (12) in elektrisch leitenden Kontakt miteinander zu bringen, **dadurch gekennzeichnet**, daß der elektrische Leiter (12) jedes Fügeglieds (4 und 6) die Form eines starren Metallrohres (12) hat, das konzentrisch zu der optischen Faser (10) des Fügeglieds (4 oder 6) ist und die optische Faser einhüllt, daß das Metallrohr (12) am Ende eine elektrische Kontaktfläche (16) hat, die benachbart zu der optischen Endfläche (14) der Faser (10) des Fügeglieds (4 oder 6) ist, und daß ein isolierendes Ausrichtglied (8) vorgesehen ist, das eine begrenzte Bahn definiert, die in sich die beiden Fügeglieder für eine Bewegung relativ aufeinander zu aufnimmt, um die elektrischen Kontaktflächen (16) in anliegende Beziehung in Eingriff miteinander und gleichzeitig die optischen Flächen (14) in lichtübertragende Beziehung zueinander zu bringen.

2. Verbinder nach Anspruch 1, **dadurch gekennzeichnet**, daß die optische Endfläche (14) jedes Fügeglieds (4 oder 6) sich unter rechten Winkeln zu der Längsachse der Faser (10) und parallel zu der elektrischen Endkontaktfläche (16) des Metallrohres (12) erstreckt, wobei die optische Endfläche (14) gegenüber der Kontaktfläche (16) und relativ zu der Längsachse zurückgesetzt ist.

3. Verbinder nach Anspruch 1 oder 2, **dadurch gekennzeichnet**, daß das Ausrichtglied (8) aus einem keramischen Material hergestellt ist.

4. Verbinder nach Anspruch 1, 2 oder 3, **dadurch gekennzeichnet**, daß jedes Fügeglied (4 oder 6) die Form einer optischen Nadel hat.

5. Verbinder nach einem der vorhergehenden Ansprüche, dadurch **gekennzeichnet**, daß das Ansrichtglied die Form einer Hülse (8) hat, die eine Bohrung (22) aufweist, die die Fügeglieder (4 und 6) eng und gleitfähig aufnimmt.

6. Elektro-optische Vorrichtung mit einer elektrischen Komponente (52, 54) und optischen Faserleitungen (36, 38, 40, 42), die jeweils an einen äußeren optischen Schaltkreis mittels eines Verbinders angeschlossen sind, wie er in einem der vorhergehenden Ansprüche beansprucht ist, **dadurch gekennzeichnet**, daß die elektrische Leitung (18), die mit dem Rohr (12) eines (6) der Fügeglieder (4 und 6) jedes Verbinders (2) verbunden ist, mit einer elektrischen Spannungsquelle verbunden ist, während die elektrische Leitung (20), die mit dem Rohr (12) des anderen Fügegliedes (4) verbunden ist, an die elektrische Komponente (52, 54) über Mittel (58, 60, 62 oder 64) angeschlossen ist, die einen Betrieb der elektrischen Komponente (52, 54) verhindern, wenn die elektrischen Kontaktflächen (16) der Metallrohre (12) der Fügeglieder (4 und 6) voneinander beabstandet sind.

## Revendications

1. Connecteur optoélectrique (2) comportant des premier et second éléments d'accouplement (4 et 6), comportant chacun une fibre optique (10) ayant une face optique extrême (14) et comportant chacun un conducteur électrique allongé (12) connecté à un fil conducteur électrique (18 ou 20) et supporté dans une disposition parallèle avec ladite fibre optique (10), lesdits éléments d'accouplement (4 et 6) pouvant être accouplés pour amener les faces optiques extrêmes (14) des fibres optiques (10) dans une relation de transmission de lumière entre elles et pour amener simultanément lesdits conducteurs (12) en contact électriquement conducteur l'un avec l'autre ; caractérisé en ce que le conducteur électrique (12) de chaque élément d'accouplement (4 et 6) se présente sous la forme d'un tube métallique rigide (12) qui est concentrique à la fibre optique (10) de l'élément d'accouplement (4 ou 6) et qui renferme cette fibre, ledit tube métallique (12) ayant une surface extrême (16) de contact électrique qui est proche de la face optique extrême (14) de la fibre (10) de l'élément d'accouplement (4 ou 6) ; et en ce qu'un élément isolant (8) d'alignement est prévu, définissant un trajet fermé recevant les deux éléments d'accouplement pour qu'ils se déplacent l'un vers l'autre afin d'engager en butée, l'une contre l'autre, lesdites surfaces (14) de contact électrique et d'amener simultanément lesdites faces optiques (16) dans une relation de transmission de la lumière entre elles.

2. Connecteur selon la revendication 1, caractérisé en ce que la face optique extrême (14) de chaque élément d'accouplement (4 ou 6) s'étend à angle droit par rapport à l'axe longitudinal de la fibre (10) et parallèlement à la surface extrême (16) de contact électrique du tube métallique (12), la face optique extrême (14) étant placée en retrait de ladite face de contact (16) et par rapport audit axe longitudinal.

3. Connecteur selon la revendication 1 ou 2, caractérisé en ce que l'élément d'alignement (8) est réalisé en une matière céramique.

4. Connecteur selon la revendication 1, 2 ou 3, caractérisé en ce que chaque élément d'accouplement (4 ou 6) se présente sous la forme d'une aiguille optique.

5. Connecteur selon l'une quelconque des revendications précédentes, caractérisé en ce que l'élément d'alignement se présente sous la forme d'une virole (8) ayant un canal (22) recevant étroitement et par glissement lesdits éléments d'accouplement (4 et 6).

6. Dispositif électro-optique comportant un composant électrique (52, 54) et des conducteurs (36, 38, 40 et 42) à fibre optique connectés chacun à un circuit optique extérieur au moyen d'un connecteur selon l'une quelconque des revendications précédentes, caractérisé en ce que le fil conducteur électrique (18) connecté au tube (12) de l'un (6) des éléments d'accouplement (4 et 6) de chaque connecteur (2) est connecté à une source de tension électrique, le fil conducteur électrique (20) connecté au tube (12) de l'autre élément d'accouplement (4) étant connecté audit composant électrique (52, 54) par des moyens (58, 60, 62 ou 64) destinés à empêcher le composant électrique (52, 54) de fonctionner lorsque les surfaces (16) de contact électrique des tubes métalliques (12) des éléments d'accouplement (4 et 6) sont espacées l'une de l'autre.
